# NEW EUROPEAN PATENT SPECIFICATION

(11) **EP 0 471 951 B2**
(45) Date of publication and mention of the opposition decision: **02.01.2003**
(45) Mention of the grant of the patent: 27.09.1995
(21) Application number: 91110797.7
(22) Date of filing: 28.06.1991
(51) Int. Cl.: B60T 8/88

(54) **Antilock brake control system**
Blockierschutzbremssystem
Système de freinage anti-blocage

(30) Priority: 28.06.1990 JP 16834190
(43) Date of publication of application: 26.02.1992
(73) Proprietor: AISIN SEIKI KABUSHIKI KAISHA, Kariya City Aichi Pref. (JP)
(72) Inventor: Naruse, Iwao, Nagoya city, Aichi pref. (JP); Takeuchi, Motohide, Tokoname city, Aichi pref. (JP)
(74) Representative: Pellmann, Hans-Bernd, Dipl.-Ing.

(56) References cited:
- EP-A- 0 152 101
- EP-A- 0 222 047
- EP-A- 0 249 756
- EP-A- 0 369 179
- DE-A- 2 702 800
- DE-A- 3 225 455
- DE-A- 3 447 449
- DE-A- 3 833 473

## Description

### BACKGROUND OF THE INVENTION

The present invention relates to an anti-lock brake control system for preventing the locked condition of each wheel during brake operation, and in particular to an anti-lock brake control system having a judging means for checking whether a microprocessor is in normal operation or not.

A conventional anti-lock brake control system of this kind is disclosed, for example, in Japanese Patent Laid-open Print No.Hei 1-246642, published in 1989 without examination.

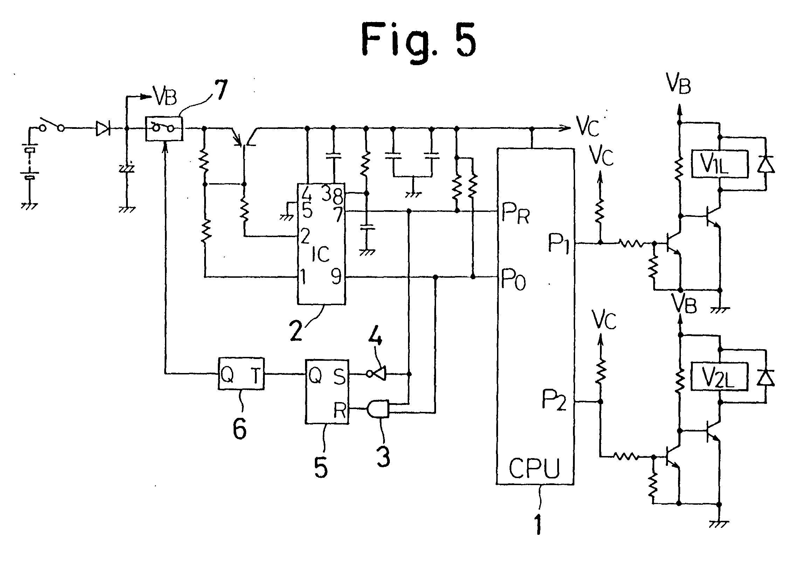

The conventional control system has a structure as shown in Fig.5. That is to say, a microprocessor 1 includes an output port P0 from which a pumping signal in the form of a pulse signal with a cycle is to be fed to a monitoring circuit 2, which is in the form of an IC, and when the pumping signal becomes abnormal, the monitoring circuit 2 begins to provide a set signal to a reset terminal PR of the microprocessor 1. In addition, the pumping signal and the reset signal from the monitoring circuit 2 are to be input to a set/reset flip-flop circuit 5 via an AND-circuit and a NOT-circuit 4, respectively, and an abnormal operation of the microprocessor 1 is prevented in such a manner that the power supply to the microprocessor 1 is terminated by turning off a power switching circuit 7 after a lapse of a time starting with the input of the reset signal or the turning off of the power supply switching circuit 7.

However, in the foregoing conventional system, if the abnormal operation of the microprocessor 1 occurs after failure or malfunction of the monitoring circuit 2 and/or the power supply switching circuit 7 while the microprocessor 1 is supplied with electric power, such abnormal operation of the microprocessor 1 can not be detected. Thus, the resultant microprocessor 1 continues to issue a signal which indicates the increase of the brake fluid pressure to a solenoid valve, resulting in an unexpected locked condition of each wheel, or continues to issue a signal indicating the decrease of the brake fluid pressure, by which the brake operation can not be established.

At this stage, in the conventional device shown in Fig.5, even if the microprocessor 1 tries to check whether the monitoring circuit 2 and the power supply switching circuit 7 can operate normally or not by issuing abnormal signals thereto, the check is in vain or is of no use. The reason is that the microprocessor 1 is turned off when the monitoring circuit 2 and the power supply switching circuit 7 operate normally.

Moreover, document EP-A-0 369 179 discloses an anti-lock control device for a vehicle in which the speeds of the vehicle wheels are detected from wheel speed sensors. The anti-lock operation is effected through brake fluid pressure control by controlling control valve solenoids and a brake fluid feeder motor depending on the rotational speed of any one of the vehicle wheels. Prior to anti-lock operation of the system, the functioning of the wheel speed sensors is checked to determine a malfunctioning wheel speed sensor.

However, failure testing is only performed for the employed wheel speed sensors on the basis of a comparison of the wheel speed sensor output signals, and abnormal operation of the failure testing device itself can not be detected.

### SUMMARY OF THE INVENTION

It is a primary object of the present invention to provide an anti-lock control system without the foregoing drawbacks.

It is another object of the present invention to provide an anti-lock control system in which the abnormal of a microprocessor can be monitored and a safety braking operation can be assured despite of failure of a monitoring circuit for monitoring the microprocessor.

According to the present invention, these objects are accomplished by an anti-lock brake control system as defined in claim 1.

### BRIEF DESCRIPTION OF THE DRAWINGS

The above and other objects, features and advantages of the present invention will became more apparent and more readily appreciated from the following detailed description of preferred exemplary embodiments of the present invention, taken in connection with the accompanying drawings, wherein:
Fig.1 is a block diagram of an anti-lock brake control system ;
Fig.2 is a block diagram showing a main portion of the present invention;
Fig.3 and Fig.4 are flowcharts each of which shows a procedure carried out upon detection of an abnormal condition; and
Figs.5 is an electric circuit of a conventional anti-lock brake control system.

### DETAILED DESCRIPTION OF THE PREFERRED EMBODIMENT

Hereinafter, one embodiment of an anti-lock brake system according to the present invention will be described with reference to the attached drawings.

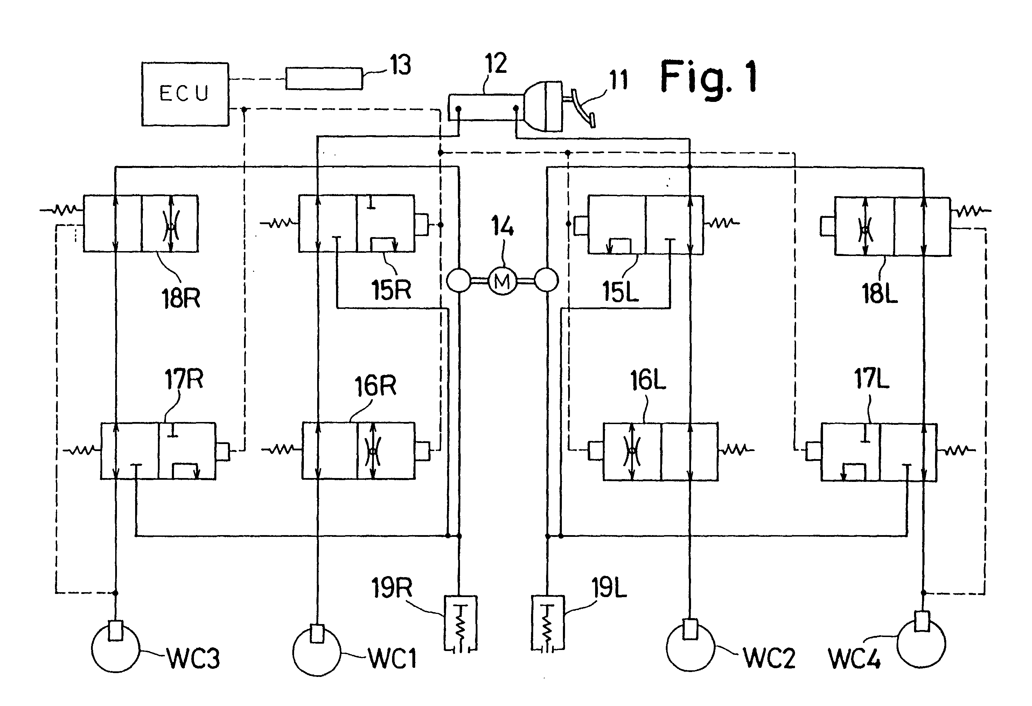

In Fig.1, which shows an anti-lock brake system to be controlled by a control device according to the present invention, the system includes a brake pedal 11, a master cylinder 12, a sensor or means 13 for detecting the rotational speed of the wheel, a motor 14 for the fluid circulation, a pair of front main solenoid valves 15R and 15L, a pair of front sub solenoid valves 16R and 16L, a pair of rear main solenoid valves 17R and 17L, a pair of valves 18R and 18L, a pair of reservoirs 19R and 19L, and four wheel cylinders WC1, WC2, WC3 and WC4.

In the anti-lock brake system, under normal brake operation, an amount of master cylinder pressure (hereinafter simply referred to as M/C pressure) which is developed in the mastercylinder 12 upon depression of the brake pedal 11 is to be transmitted to the wheel cylinders WC1-4 in such a manner that the condition of each wheel cylinder is kept in the illustrated condition.

When the locking of any one of the wheels is detected by an ECU due to the detecting signal supplied thereto from the sensor 13, each of the front main solenoid valves 15R and 15L and the rear main solenoid valves 17R and 17L is brought from its OFF-condition, as illustrated, to its ON-condition, thereby decreasing the M/C pressure to be supplied to the wheel cylinders WC1-4. Then, when the foregoing locked condition of the wheel is released due to the resultant decrease in M/C pressure, based on the detecting signal from the sensor 13, the ECU starts the brake operation again by increasing the M/C pressure after establishing the OFF-condition of each of the main solenoid valves 15R, 15L, 17R and 17L.

The repetition of such operation results in the gradual decrease of the speed of the vehicle without locking each wheel entirely, thereby at the end leading to the stopping of the vehicle.

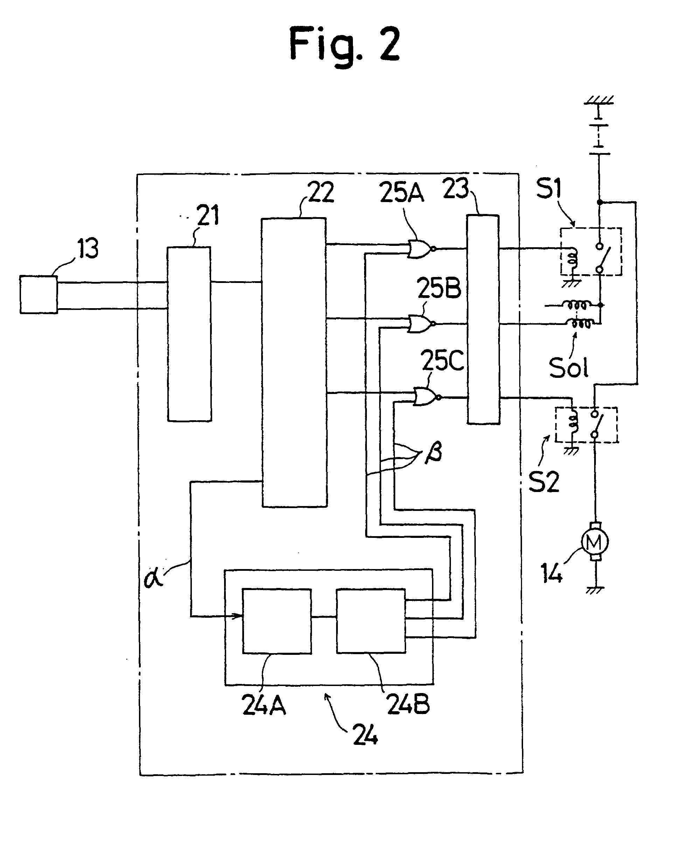

Fig.2 shows a block diagram of a control circuit arranged at an output side of the ECU, which includes an input interface 21 for receiving the detecting signal from the sensor 13, an output judging circuit or an output judging means 22 for judging an output, an output interface 23 through which ON-signals or load output signals are fed from the output judging circuit 22 to a power supply electromagnetic switch (main switch) S1, a solenoid Sol of each main solenoid valve and an electromagnetic switch (operation switch) S2 for the motor 14, respectively, and an inhibitition circuit 24 for inhibiting the output from the output judging circuit 22 upon malfunction of the ECU which includes a malfunction detecting means 24A and an inhibiting means 24B.

The inhibiting circuit 24 is designed to determine at the malfunction detecting means 24A whether a pumping signal α shows the abnormal condition or not, and to issue inhibiting signals β, if the answer is positive, to NOR circuits 25A, 25B and 25C, so as to interrupt the output of ON-signals from the output judging circuit 22 to the switch S1, each solenoid Sol of each main solenoid valve and the switch S2.

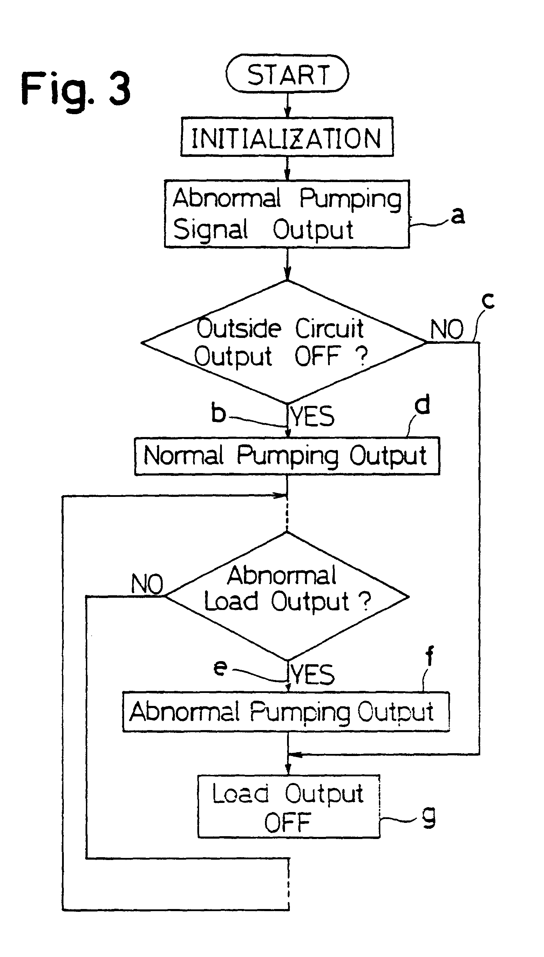

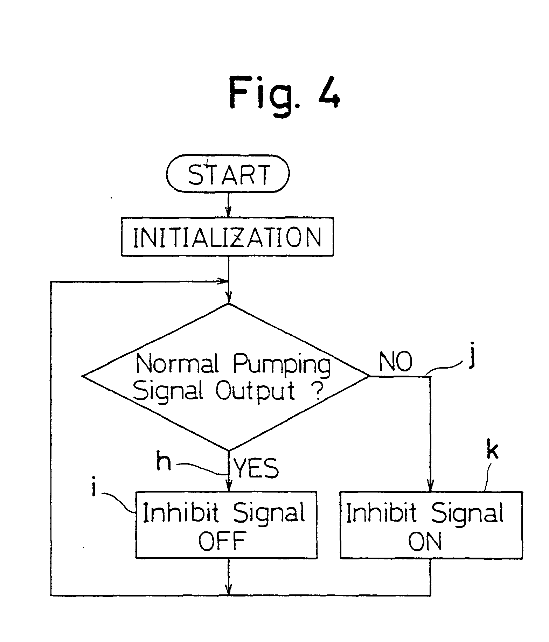

Next, the operation of the anti-lock brake system having the foregoing control device will be detailed based on the flow charts shown in Figs. 3 and 4.

According to Fig.3, in order to check whether the inhibiting circuit 24 functions or not, an abnormal pumping signal is fed thereto from the output judging circuit 22 (a) and at this time, if the interruption of the load output signals has been established by the inhibiting circuit 24, the circuit 24 is deemed to function normally, and the operation advances to the following main routine (b). If the inhibiting circuit 24 is found to be malfunctioning, the ECU interrupts the output of load output signals from the output judging circuit 22.

It is noted that the foregoing operation or function check for the inhibiting circuit 24 can be performed by connecting the load output port to the input port for checking the inhibiting circuit 24 in the ECU.

While the inhibiting circuit 24 is in normal functional operation, after the foregoing checking, a normal pumping signal is issued (d). Upon detection of an abnormal condition in the load output (e), an abnormal pumping signal α is issued from the output judging circuit 22 to the inhibiting circuit 24 (f), which results in the interruption of the load output by the inhibiting circuit 24 (g). It is noted that the foregoing method for detecting the load output is the same as the conventional one.

In Fig.4, which shows a control operation in the inhibiting circuit 24, the inhibiting circuit 24 is designed to check whether the normal pumping signal α is issued or not. If the result is positive (h) the output of the inhibiting signal is terminated (i), and in case of a negative result (j) the output of the inhibiting signal is brought into issue (k).

As a result of the foregoing control device, despite of the failure or malfunction of the monitoring circuit for resetting the ECU, upon issue of the abnormal signal from the ECU due to its failure or malfunction thereof, for the prevention of the output of the load signals, each of the switch S1, solenoid valves 15R, 15L, 17R and 17L and switch S2 is kept in the OFF-condition, thereby ensuring the ordinary brake operation.

As mentioned above, in accordance with the present invention, in the event of a failure or malfunction in the electric control device for controlling the anti-lock brake system, the anti-lock brake system can fulfil its ordinary brake operation which results in the avoidance of the danger of a non-braking condition.

## Claims

1. An anti-lock brake control system comprising:
a reservoir (19R, 19L) for storing therein an amount of fluid,
a master cylinder (12),
a plurality of wheel cylinders (WC1, WC2, WC3, WC4) provided for a plurality of corresponding wheels,
a plurality of control valves (15R, 15L, 17R, 17L) each of which is designed for establishing fluid communication of a respective wheel cylinder (WC1, WC2, WC3, WC4) to a selected one of the master cylinder (12) and the reservoir (19R, 19L),
a plurality of solenoids (Sol) each of which is connected to a battery and each control valve,
a first switch (S1) for turning on the solenoids (Sol) concurrently to activate the corresponding control valves (15R, 15L, 17R, 17L),
motor means (14, S2) including a motor (14), a second switch (S2) interposed between the motor (14) and the battery, and a pump driven by the motor (14) upon closure of the second switch (S2) for returning the fluid from the reservoir (19R, 19L) to the master cylinder (12), and
control means (ECU) for controlling the solenoids (Sol) and the motor means (14, S2) based on the rotational speed of any one of the wheels, being
**characterized by**
output judging means (22) arranged to output a load signal to the first and second switches (S1, S2) and to the solenoids (Sol), a pumping signal (α) which shows a normal condition on a normal state of the load output signal and shows an abnormal condition on an abnormal state of the load output signal and which shows the abnormal condition set by said output judging means (22) for checking purposes, wherein
inhibiting means (24) is arranged to receive the pumping signal (α) and to determine the condition thereof in order to interrupt the output of the load output signal to the first and second switches (S1, S2) and the solenoids (Sol) when it is determined that the pumping signal shows the abnormal condition, and said inhibiting means (24) is arranged to receive said pumping signal (α) set by said output judging means (22) and to interrupt the output of the load output signal so as to open the first and second switches (S1, S2) in response thereto when said abnormal state is determined, and wherein
said control means (ECU) is arranged to check the functional state of said inhibiting means (24) by determining whether or not the inhibiting means (24) interrupts the output of the load output signal when said pumping signal (α) indicative of the abnormal state set by said output judging means (22) is applied from said output judging means (22) to said inhibiting means (24) and to inhibit the output of the load output signal in case it is determined that the inhibiting means (24) does not interrupt the output of the load output signal, in response thereto.

2. An anti-lock brake control system according to claim 1, **characterized in that** said inhibiting means (24) comprises a malfunction detecting means (24A) for determining whether said pumping signal (α) shows the abnormal condition or not, and an inhibiting means (24B) for issuing inhibiting signals (β) so as to interrupt the output of said load output signals in order to prevent the establishment of the anti-lock operation when said pumping signal (α) shows the abnormal condition or indicates the abnormal state set by said output judging means (22) for checking purposes.

3. An anti-lock brake control system according to claim 2, **characterized by** further comprising switching means (25A, 25B, 25C) receiving during a normal state of said load output signal said load output signal from the output judging means (22), and receiving in case of an abnormal state of said load output signal said load output signal from the output judging means (22) and said inhibiting signals (β) from said inhibiting means (24B), said inhibiting signals (β) thereby inhibiting the further output of said load output signals to the first and second switches (S1, S2) and the solenoids (Sol).

## Patentansprüche

1. Blockierschutz-Bremssystem mit:
einem Vorratsbehälter (19R, 19L) zur Speicherung einer Fluidmenge,
einem Hauptzylinder (12),
einer Vielzahl von Radzylindern (WC1, WC2, WC3, WC4) für eine Vielzahl von entsprechenden Rädern,
einer Vielzahl von Steuerungsventilen (15R, 15L, 17R, 17L) zum Aufbau einer Fluidverbindung von einem entsprechenden Radzylinder (WC1, WC2, WC3, WC4) zu einem ausgewählten Hauptzylinder (12) und dem Vorratsbehälter (19R, 19L),
einer Vielzahl von Solenoiden (Sol), von denen jedes mit einer Batterie und einem Steuerungsventil (15R, 15L, 17R, 17L) verbunden ist,
einem ersten Schalter (S1) zum Einschalten der Solenoide (Sol) und gleichzeitigem Aktivieren der entsprechenden Steuerungsventile (15R, 15L, 17R, 17L),
einer Motoreinrichtung (14, S2) mit einem Motor (14), einem zweiten, zwischen dem Motor (14) und der Batterie angeordneten Schalter (S2), und einer durch den Motor (14) nach Schließen des zweiten Schalters (S2) angetriebenen Pumpe zum Zurückführen von Fluid vom Vorratsbehälter (19R, 19L) zum Hauptzylinder (12), und
einer Steuerungseinrichtung (ECU) zur Steuerung der Solenoide (Sol) und der Motoreinrichtung (14, S2) auf der Basis der Drehgeschwindigkeit von einem der Räder,
**gekennzeichnet durch**
einer Ausgangsbewertungseinrichtung (22) zur Ausgabe eines Lastausgangssignals zu dem ersten und zweiten Schalter (S1, S2) und zu den Solenoiden (Sol), und eines Pumpensignals (α), das einen normalen Zustand bei einem normalen Zustand des Lastausgangssignals und einen abnormalen Zustand bei einem abnormalen Zustand des Lastausgangssignals angibt, und das den **durch** die Ausgangsbewertungseinrichtung (22) zu Testzwecken eingestellten abnormalen Zustand angibt, wobei
eine Verhinderungseinrichtung (24) vorgesehen ist zum Empfangen des Pumpensignals (α) und zum Bestimmen des Zustands desselben zur Unterbrechung der Ausgabe des Lastausgangssignals zu dem ersten und zweiten Schalter (S1, S2) und zu den Solenoiden (Sol), wenn bestimmt wird, dass das Pumpensignal den abnormalen Zustand angibt, und die Verhinderungseinrichtung (24) vorgesehen ist zum Empfangen des **durch** die Ausgangsbewertungseinrichtung (22) eingestellten Pumpensignals (α) und zum Unterbrechen der Ausgabe des Lastausgangssignals zum Öffnen des ersten und zweiten Schalters (S1, S2) in Abhängigkeit davon, wenn der abnormale Zustand ermittelt wird, und wobei
die Steuerungseinrichtung (ECU) vorgesehen ist zur Prüfung des funktionalen Zustands der Verhinderungseinrichtung (24) **durch** Bestimmen, ob die Verhinderungseinrichtung (24) die Ausgabe des Lastausgangssignals unterbricht oder nicht, wenn das von der Ausgangsbewertungseinrichtung (22) eingestellte Pumpensignal (α) zur Angabe des abnormalen Zustands von der Ausgangsbewertungseinrichtung (22) an die Verhinderungseinrichtung (24) angelegt wird, und zum Verhindern der Ausgabe des Lastausgangssignals in dem Fall, dass bestimmt wird, dass die Verhinderungseinrichtung (24) in Abhängigkeit davon die Ausgabe des Lastausgangssignals nicht verhindert.

2. Blockierschutz-Bremssystem nach Anspruch 1,
**dadurch gekennzeichnet, dass**
die Verhinderungseinrichtung (24) eine Fehlfunktions-Erfassungseinrichtung (24a), die auf der Basis der Beendigung des Pumpensignals (α) bestimmt, ob das Lastausgangssignal einen abnormalen Zustand aufweist oder nicht, und eine Verhinderungseinrichtung (24b) umfasst zur Ausgabe von Verhinderungssignalen (β) zur Unterbrechung der Ausgabe des Lastausgangssignals zur Verhinderung des Aufbaus eines Anti-Blockier-Betriebs, wenn das Pumpensignal (α) den abnormalen Zustand oder den durch die Ausgangsbewertungseinrichtung (22) zu Testzwecken eingestellten abnormalen Zustand anzeigt.

3. Blockierschutz-Bremssystem nach Anspruch 2,
**ferner gekennzeichnet durch,**
eine Schalteinrichtung (25A, 25B, 25C) zum Empfangen des Lastausgangssignals von der Ausgangsbewertungseinrichtung (22) während eines normalen Zustands des Lastausgangssignals, und Empfangen des Lastausgangssignals von der Ausgangsbewertungseinrichtung (22) und den Verhinderungssignalen (β) von der Verhinderungseinrichtung (24b) im Fall eines abnormalen Zustands des Lastausgangssignals, wobei die Verhinderungssignale (β) **dadurch** die weitere Ausgabe des Lastausgangssignals zum ersten und zweiten Schalter (S1, S2) und den Solenoiden (Sol) verhindern.

## Revendications

1. Système de commande de freinage antiblocage comprenant :
un réservoir (19R, 19L) destiné à stocker dans celui-ci une certaine quantité de fluide,
un maître-cylindre (12),
une pluralité de cylindres de roues (WC1, WC2, WC3, WC4) prévus pour une pluralité de roues correspondantes,
une pluralité de vannes de commande (15R, 15L, 17R, 17L) dont chacune est conçue pour établir une communication de fluide avec un cylindre de roue respectif (WC1, WC2, WC3, WC4) vers un élément sélectionné parmi le maître-cylindre (12) et le réservoir (19R, 19L),
une pluralité d'électroaimants (Sol) dont chacun est relié à une batterie et à chaque vanne de commande,
un premier commutateur (S1) destiné à activer les électroaimants (Sol) simultanément à l'activation des vannes de commande correspondantes (15R, 15L, 17R, 17L),
un moyen de moteur (14, S2) comprenant un moteur (14), un second commutateur (S2) intercalé entre le moteur (14) et la batterie, et une pompe entraînée par le moteur (14) lors de la fermeture du second commutateur (S2) afin de renvoyer le fluide du réservoir (19R, 19L) vers le maître-cylindre (12), et
un moyen de commande (ECU) destiné à commander les électroaimants (Sol) et le moyen de moteur (14, S2) sur la base de la vitesse de rotation de l'une quelconque des roues, et
**caractérisé par**
un moyen d'évaluation de sortie (22) agencé pour fournir en sortie un signal de charge aux premier et second commutateurs (S1, S2) et aux électroaimants (Sol), un signal de pompage (α) qui présente une condition normale sur un état normal du signal de sortie de charge et présente une condition anormale sur un état anormal du signal de sortie de charge et qui indique la condition anormale établie par ledit moyen d'évaluation de sortie (22) dans des buts de contrôle, dans lequel
un moyen d'inhibition (24) est agencé pour recevoir le signal de pompage (α) et pour déterminer la condition de celui-ci de manière à interrompre la sortie du signal de sortie de charge vers les premier et second commutateurs (S1, S2) et les électroaimants (Sol) lorsqu'il est déterminé que le signal de pompage présente la condition anormale, et ledit moyen d'inhibition (24) est agencé pour recevoir ledit signal de pompage (α) établi par ledit moyen d'évaluation de sortie (22) et pour interrompre la sortie du signal de sortie de charge de façon à ouvrir les premier et second commutateurs (S1, S2) en réponse à celui-ci lorsque ledit état anormal est déterminé, et dans lequel
ledit moyen de commande (ECU) est agencé pour contrôler l'état fonctionnel dudit moyen d'inhibition (24) en déterminant si le moyen d'inhibition (24) interrompt ou non la sortie du signal de sortie de charge lorsque ledit signal de pompage (α) indicatif de l'état anormal établi par ledit moyen d'évaluation de sortie (22) est appliqué à partir dudit moyen d'évaluation de sortie (22) audit moyen d'inhibition (24) et pour interdire la sortie du signal de sortie de charge dans le cas où il est déterminé que le moyen d'inhibition (24) n'interrompt pas la sortie du signal de sortie de charge, en réponse à celui-ci.

2. Système de commande de freinage antiblocage selon la revendication 1, **caractérisé en ce que** ledit moyen d'inhibition (24) comprend un moyen de détection de mauvais fonctionnement (24A) destiné à déterminer si ledit signal de pompage (α) présente la condition anormale ou non, et un moyen d'inhibition (24B) destiné à émettre des signaux d'inhibition (β) de façon à interrompre la sortie desdits signaux de sortie de charge de manière à empêcher l'établissement du fonctionnement antiblocage lorsque ledit signal de pompage (α) présente la condition anormale ou indique l'état anormal établi par ledit moyen d'évaluation de sortie (22) dans des buts de contrôle.

3. Système de commande de freinage antiblocage selon la revendication 2, **caractérisé en ce qu'**il comprend en outre un moyen de commutation (25A, 25B, 25C) recevant durant un état normal dudit signal de sortie de charge ledit signal de sortie de charge provenant du moyen d'évaluation de sortie (22), et recevant dans le cas d'un état anormal dudit signal de sortie de charge ledit signal de sortie de charge provenant du moyen d'évaluation de sortie (22) et lesdits signaux d'inhibition (β) provenant dudit moyen d'inhibition (24B), lesdits signaux d'inhibition (β) interdisant ainsi la poursuite de la sortie desdits signaux de sortie de charge vers les premier et second commutateurs (S1, S2) et les électroaimants (Sol).
